# EUROPÄISCHE PATENTSCHRIFT

(11) **EP 2 399 541 B1**
(45) Veröffentlichungstag und Bekanntmachung des Hinweises auf die Patenterteilung: **12.08.2015**
(21) Anmeldenummer: 11171018.2
(22) Anmeldetag: 22.06.2011
(51) Int. Cl.: A61C 5/08, A61C 5/10

(54) **Zahntechnischer Aufbau und Verfahren zur Herstellung desselben**
Dental structure and method for manufacturing the same
Structure dentaire et son procédé de fabrication

(30) Priorität: 23.06.2010 DE 102010024756
(43) Veröffentlichungstag der Anmeldung: 28.12.2011
(73) Patentinhaber: Hähnel, Bernd, 83242 Reit im Winkl (DE)
(72) Erfinder: Hähnel, Bernd, 83242 Reit im Winkl (DE)
(74) Vertreter: Grosse, Felix Christopher

(56) Entgegenhaltungen:
- EP-A2- 0 252 412
- WO-A1-02/069834
- DE-A1- 19 508 771
- DE-A1-102007 014 458
- DE-C- 828 284

## Beschreibung

Die Erfindung betrifft einen zahntechnischen Aufbau, insbesondere eine Teleskopkrone oder Teleskopprothese, umfassend mindestens ein auf zumindest einem patientenseitigen Zahnstumpf anzuordnendes Primärteil, mindestens ein auf dem Primärteil anzuordnendes Sekundärteil und eine Krone oder eine Prothese, wobei das mindestens eine Sekundärteil in die Krone oder die Prothese eingefügt, insbesondere eingeklebt ist. Derartige zahntechnische Aufbauten, insbesondere Teleskopkronen oder Teleskopprothesen, sind in der Zahnmedizin bzw. Zahntechnik in Form so genannter Doppelkronen bekannt. Sie bestehen üblicherweise aus einer auf einem noch vorhandenen patientenseitigen Zahnstumpf fixierten Primärkrone. Auf diese Primärkrone wird als abnehmbare Zahnteilprothese eine Sekundärkrone aufgebracht. Die Sekundärkrone ist in die Teleskopkrone bzw. in die -prothese eingearbeitet.

Zwischen der Primärkrone, im weiteren als Primärteil bezeichnet, und der Sekundärkrone, im weiteren als Sekundärteil bezeichnet, bestehen Gleit- und Haftreibungswiderstände, die durch ihre Klemmwirkungen die Haftfunktionen für die Zahnteilprothese bestimmen. Sie sind als starre Verbindungselemente, üblicherweise als Konuskronen ausgebildet.

Auf der Außenoberfläche des Primärteils wird mit einer formangepassten Innenoberfläche das anatomisch ausgebildete Sekundärteil als Zahnteilprothese form- und kraftschlüssig fixiert. Die Zahnteilprothese ist auf das patientenseitig fixierte Primärteil aufgesetzt und wird durch die Gleit- und Haftreibung zwischen Sekundär- und Primärteil gehalten. Das heißt, dass sich beim Einsetzen der Zahnteilprothese oder -krone Primär- und Sekundärteil teleskopartig ineinander schieben und dadurch den gewünschten Halt geben. Ein derartiger Teleskopaufbau, insbesondere in Form einer Teleskop- oder Doppelkrone, dient als Verbindungselement in der Zahnprothetik, vorzugsweise in der Teilprothetik.

Ein Sekundärteil besteht üblicherweise aus einer Metalllegierung, die in einer Gussform hergestellt ist. Alternativ werden Sekundärteile auch mit Hilfe der Galvanotechnik, auch als Elektroplatieren bezeichnet, hergestellt, wobei durch elektrochemische Abscheidung metallische Niederschläge auf dem Umfang einer Positivform abgelegt werden, bis das gewünschte Sekundärteil hergestellt ist.

Obwohl die aus dem Stand der Technik bekannten Maßnahmen zur Herstellung von Sekundärteilen zufriedenstellend funktionieren, sind sowohl das Gussverfahren als auch die Galvanotechnik in der Herstellung relativ umständlich zu realisieren und im Materialaufwand sehr teuer. Zudem sind beide herkömmlichen Verfahren sehr zeitaufwändig.

Die Druckschrift EP 0 252 412 A zeigt einen zahntechnischen Aufbau mit den Merkmalen aus dem Oberbegriff des Anspruch 1. Der Aufbau enthält eine Verbundkeramikkrone mit einer auf einem patientenseitigen Zahnstumpf anzuordnende Dentalhülse. Die Dentalhülse ist in die Krone einklebbar. Üblicherweise wird die Dentalhülse mit dem Zahnstumpf fest verbunden. Eine derartige Krone ist somit auf Dauer mit dem Zahnstumpf fest verbunden.

Aus der WO 02/069834 A ist eine Teleskopkrone mit einer lösbare Verbindung zwischen einer Zahnkrone und dem Zahnstumpf bekannt. Dieser zahntechnische Aufbau umfasst ein Primärteil und ein auf dem Primärteil anzuordnendes Sekundärteil, wobei das Sekundärteil in die Krone einfügbar ist. Die gezeigten Primär- und Sekundärteile sind frustrokonisch ausgebildet. Derartige Primär- und Sekundärteile müssen genau zueinander passend gefertigt sein, und der Primärteil muss gleichzeitig an den Zahnstumpf angepasst sein. Passgenauigkeit und Anpassung sind dabei nur mit hohem technischem Aufwand erreichbar.

Aufgabe der vorliegenden Erfindung ist es somit, einen zahntechnischen Aufbau, insbesondere eine Teleskopkrone oder eine Teleskopprothese der eingangs beschriebenen Art, zu schaffen, die auf einfache Art und Weise schnell und kostengünstig hergestellt werden kann.

Gelöst wird diese Aufgabe durch den zahntechnischen Aufbau gemäß Anspruch 1 der Erfindung. Der zahntechnischer Aufbau, insbesondere eine Teleskopkrone oder Teleskopprothese umfasst mindestens ein auf dem Primärteil anzuordnendes Sekundärteil und eine Krone oder eine Prothese. Das mindestens eine Sekundärteil ist in die Krone oder die Prothese eingefügt, insbesondere eingeklebt. Das mindestens eine Sekundärteil ist aus einem zylinderförmigen und an seinen Enden Öffnungen aufweisenden Hohlkörper gebildet, und aus einem verformbaren Material gebildet. Der Innendurchmesser des zylinderförmigen Hohlkörpers des Sekundärteils ist kleiner als der Außendurchmesser des Primärteils.

Durch diese Maßnahmen wird ein zahntechnischer Aufbau vorgeschlagen, der ein auf einfache Art und Weise herstellbares Sekundärteil verwendet. Das Sekundärteil selbst ist erfindungsgemäß aus einem zylinderförmigen an seinen Enden Öffnungen aufweisenden Hohlkörper gebildet. Mit anderen Worten handelt es sich bei dem Sekundärteil um einen Rohrabschnitt, welcher von einem Endlosrohr zur weiteren Verwendung abgetrennt wird. Dieser zylinderförmige Hohlkörper wird auf das Primärteil aufgesetzt und mittels Druckbeaufschlagung auf das Primärteil aufgetrieben um anschließend das Sekundärteil zu bilden. Hinsichtlich der Druckbeaufschlagung bestehen keine weiteren Anforderungen, sodass die Kraft zum Auftreiben des zylinderförmigen Hohlkörpers auf das Primärteil beispielsweise durch einen im zahntechnischen Bereich üblicherweise verwendeten Hammer aufgebracht werden kann. Durch das Auftreiben des zylinderförmigen Hohlkörpers auf das Primärteil wird dieser entsprechend den äußeren Abmaßen des Primärteils verformt mit diesem verklemmt. Es bildet sich ein reibschlüssiger Kontakt. Die in axialer Richtung nach oben weisende Endfläche des zylinderförmigen Hohlkörpers kann auch direkt mit dem Mittel zur Druckbeaufschlagung bearbeitet werden. Es sind keine weiteren Maßnahmen, beispielsweise in Form von Unterlegteilen, erforderlich, da in einem weiteren Verarbeitungsschritt der obere Abschnitt des zylinderförmigen Hohlkörpers nach Auftreiben desselben auf das Primärteil abgetrennt wird.

Das Endlosrohr, von welchem der zylinderförmige Hohlkörper zur Verarbeitung in dem erfindungsgemäßen zahntechnischen Aufbau abgetrennt wird, ist vorzugsweise in verschiedenen Durchmessern vorrätig, so dass auch eine durchmessermäßige Anpassung des Sekundärteils an das Primärteil erfolgen kann. Die längenmäßige Anpassung erfolgt durch Wahl des entsprechenden Abtrennpunktes.

Insgesamt stellt somit die Ausbildung des Sekundärteils als zylinderförmiger, an seinen Enden Öffnungen aufweisender Hohlkörper und das Auftreiben desselben auf das Primärteil eine einfache und schnell zu realisierende Lösung zur Realisierung des vorgenannten zahntechnischen Aufbaues dar. Diese ist auch erheblich kostengünstiger als die aus dem Stand der Technik bekannten Verfahren, da keinerlei aufwändige Hilfsapparatur vorgehalten und eingesetzt werden muss. Zudem ist ein homogenes Materialgefüge erzielbar. Lunkerbildung beim Gussverfahren, Fremdmaterialeinschlüsse oder Materialschwachstellen sind ausgeschlossen

Insbesondere ist es vorteilhaft, wenn der zylinderförmige Hohlkörper aus einem gut verformbaren Material gebildet ist. Dabei ist der zylinderförmige Hohlkörper vorzugsweise aus einer hochgoldhaltigen Legierung gebildet, so dass das Auftreiben des Sekundärteils auf das Primärteil einfach zu handhaben ist und die Verformung des Sekundärteils entsprechend der Geometrie des Primärteils zufriedenstellend erfolgt. Dadurch kann höchste Präzision der Abstimmung des Sekundärteils auf das Primärteil erreicht werden.

Die Verwendung einer hochgoldhaltigen Legierung für den zylinderförmigen Hohlkörper bzw. das Sekundärteil ist insofern vorteilhaft, da keine weiteren Verträglichkeitstest durchgeführt werden müssen, da Goldlegierungen seit geraumer Zeit im zahntechnischen Bereich Verwendung finden. Zudem sind Hochgoldlegierungen infektionshemmend.

Darüber hinaus ist in vorteilhafter Weise der Innendurchmesser des zylinderförmigen Hohlkörpers bzw. des Endlosrohres, von dem dieser abgetrennt wird, derart gewählt, dass er kleiner als der Außendurchmesser des Primärteils ist. Beim Auftreiben des zylinderförmigen Hohlkörpers auf das Primärteil wird somit eine Abformung des Primärteils durch den zylinderförmigen Hohlkörper erzielt, wobei die gewünschte Klemmwirkung zwischen Primärteil und Sekundärteil realisiert wird. Je nach Wahl der Verhältnisse der Durchmesser zueinander kann die Klemmwirkung verstärkt oder vermindert werden.

In einer besonders vorteilhaften Ausführung des erfindungsgemäßen zahntechnischen Aufbaus ist die axiale Länge des zylinderförmigen Hohlkörpers im Wesentlichen der axialen Länge des Primärteils angeglichen. Durch diesen Längenabgleich kann der Materialüberschuss, welcher durch Abtrennen des über das Primärteil hinausstehenden Endes des Sekundärteils erfolgt, bestmöglich minimiert werden.

Das Primärteil ist dabei in vorteilhafter Weise konusförmig ausgebildet, was ein Auftreiben des zylinderförmigen Hohlkörpers erheblich erleichtert und die notwendige Klemmwirkung erzeugt.

Gemäß einer vorteilhaften Weiterbildung ist das Primärteil auf dem patientenseitigen Zahnstumpf durch Festzementieren fixiert. Dabei kommt insbesondere Phosphatzement zum Einsatz.

In vorteilhafter Weise wird dann die Teleskopkrone bzw. die Teleskopprothese mit dem Sekundärteil verklebt. Darüber hinaus können vorgenannte Teile insbesondere auch gelötet oder mit Tensionen im Prothesen- bzw. Kronenkunststoff eingebettet werden.

Die Erfindung wird nachstehend anhand des in den Zeichnungen dargestellten Ausführungsbeispiels näher erläutert. Es zeigen:
- Fig. 1: eine Seitenansicht des patientenseitigen Zahnstumpfes sowie des aufzubringenden Primärteils;
- Fig. 2: den patientenseitigen Zahnstumpf mit Primärteil;
- Fig. 3: den patientenseitigen Zahnstumpf mit Primärteil vor Auftreiben des zylinderförmigen Hohlkörpers als Sekundärteil;
- Fig. 4: den auf das Primärteil aufgetriebenen zylinderförmigen Hohlkörper;
- Fig. 5: das Entfernen des überschüssigen Endabschnittes des zylinderförmigen Hohlkörpers;
- Fig. 6: das Anformen des oberen Endabschnitts des zylinderförmigen Hohlkörpers an das Primärteil;
- Fig. 7: den patientenseitigen Zahnstumpf mit Primärteil und Sekundärteil;
- Fig. 8: das Aufbringen der Teleskopkrone bzw. der Teleskopprothese;
- Fig. 9: den fertiggestellten erfindungsgemäßen zahntechnischen Aufbau;

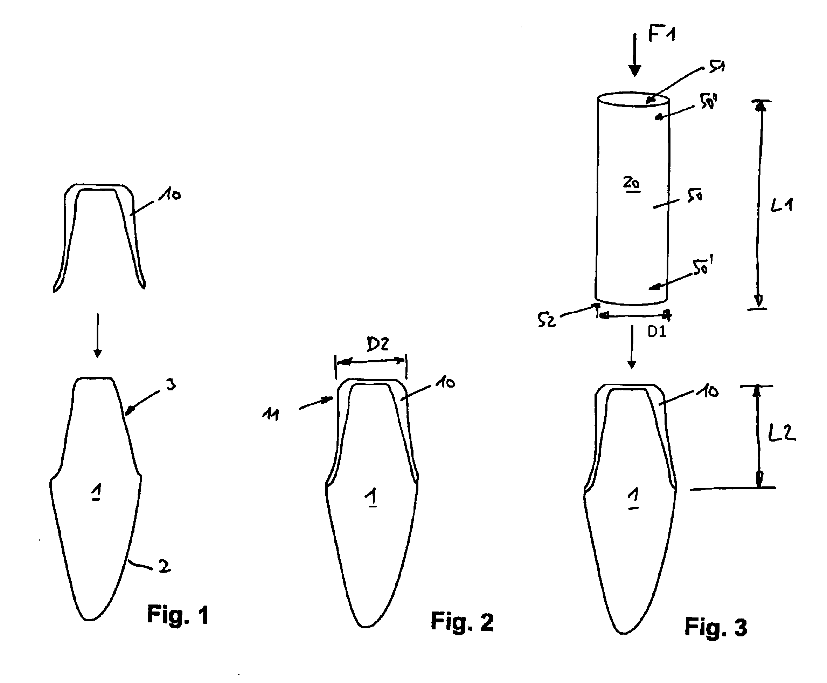

Der in Fig. 1 gezeigte patientenseitige Zahnstumpf weist eine Zahnwurzel 2 sowie einen in die Mundhöhle des Patienten ragenden Zahnabschnitt 3 auf. Der Zahnabschnitt 3 ist in Vorbereitung der Montage der Teleskopkrone konusförmig geschliffen. Das in Fig. 1 und Fig. 2 gezeigte Primärteil 10 ist hülsenförmig ausgebildet und weist eine innere Kontur auf, die der äußeren Kontur des Zahnabschnitts 3 entspricht. Das Primärteil 10 wird, wie in Fig. 2 gezeigt, auf den Zahnabschnitt 3 des patientenseitigen Zahnstumpfes 1 aufgebracht und mit diesem durch Einsatz eines Zementes (nicht gezeigt) unlösbar verbunden. Die Außenkontur des hülsenartigen Primärteils 10 weist ebenfalls eine im Wesentlichen konusförmig ausgebildete Form auf. Der in die Mundhöhle weisende Endabschnitt 11 des Primärteils 10 weist dabei einen Außendurchmesser D2 auf.

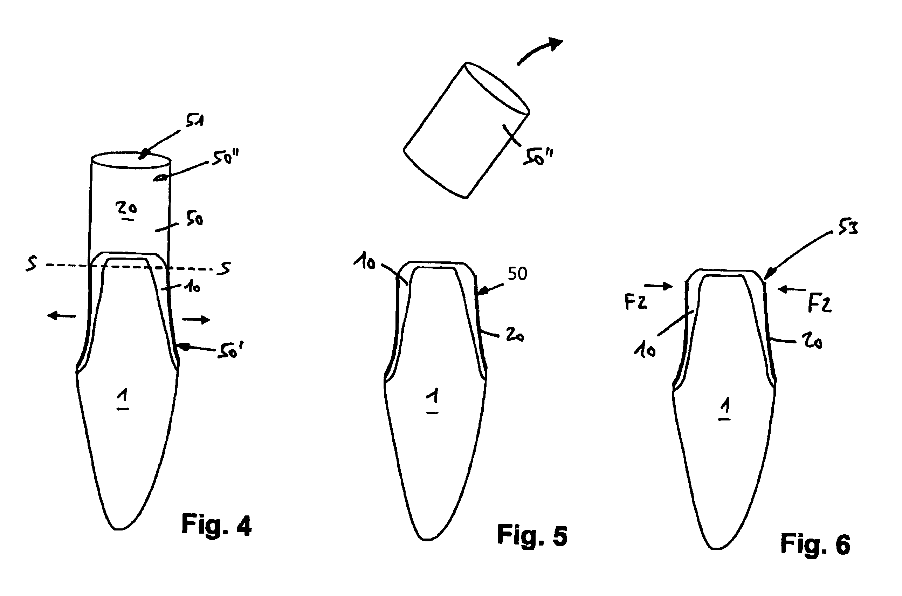

Das in Fig. 3 gezeigte Sekundärteil 20 ist aus einem zylinderförmigen Hohlkörper 50 gebildet. Der zylinderförmige Hohlkörper 50 ist rohrförmig ausgebildet und weist an seinen Enden Öffnungen 51 und 52 auf. Der zylinderförmige Hohlkörper 50 besitzt ein zum Zahnstumpf weisenden Endabschnitt 50' sowie ein in entgegengesetzte Richtung weisenden Endabschnitt 50". Der zum Primärteil 10 hin weisende Endabschnitt 50' wird zu dem Endabschnitt 11 des Primärteils 10 hin ausgerichtet. Der zylinderförmige Hohlkörper 50 wird dann unter Aufbringung der Kraft F1, welche im Wesentlichen in axialer Richtung des zylinderförmigen Hohlkörpers 50 und des patientenseitigen Zahnstumpfes 1 gerichtet ist, auf das auf dem patientenseitigen Zahnstumpf 1 angeordnete Primärteil 10 aufgetrieben. Dabei verformt sich der Endabschnitt 50' in radialer Richtung, in Fig. 4 durch die Pfeile A gezeigt, und passt sich der Außengeometrie des Primärteils 10 an. Die auf den Endabschnitt 50' einwirkende Kraft F1 wird manuell durch einen Hammer (nicht gezeigt) erzeugt.

Nach erfolgtem Auftreiben des zylinderförmigen Hohlkörpers 50 auf das Primärteil 10, wie in Fig. 4 gezeigt, wird der Endabschnitt 50", welcher über das Primärteil 10 in axialer Richtung hinaus steht, von dem zylinderförmigen Hohlkörper 50 abgetrennt. Dies geschieht entlang der Trennlinie S-S, wie in Fig. 4 gezeigt. Das in Fig. 5 gezeigte abgetrennte obere Ende 50" des zylinderförmigen Hohlkörpers 50 wird aus dem Mundraum des Patienten entfernt.

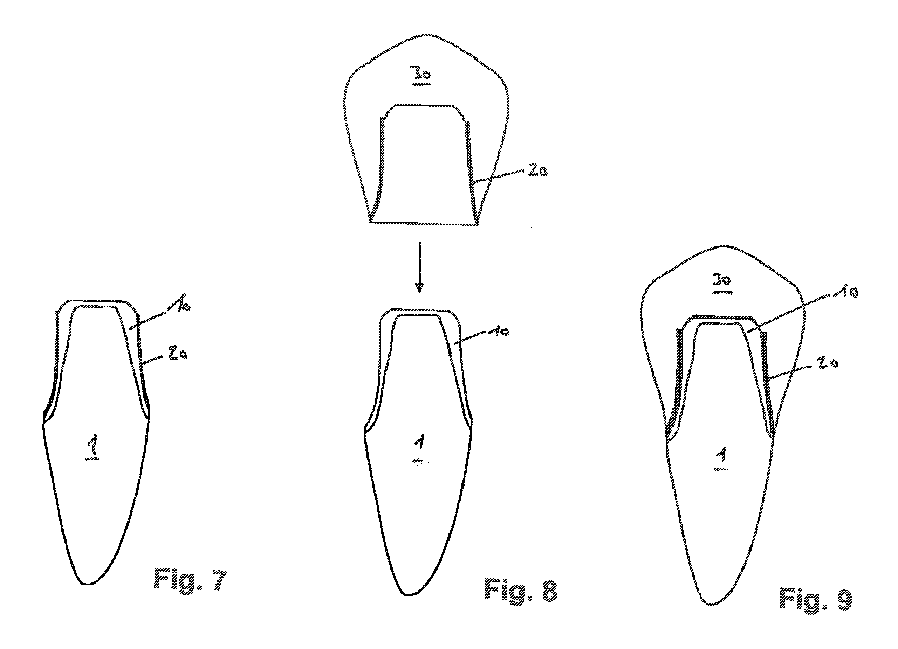

Unter Kraftaufbringung der Kraft F2 in radialer Richtung auf die äußere Umfangsfläche des oberen Endabschnitts 53 des zylinderförmigen Hohlkörpers 50 erfolgt eine Anformung des oberen Endabschnitts 53 des zylinderförmigen Hohlkörpers 50 an den oberen Endabschnitt 11 des Primärteils 10. Im Ergebnis liegt dann das Sekundärteil 20, wie in Fig. 7 gezeigt, an der Außenoberfläche des Primärteils 10 an. Das Sekundärteil 20 hat dabei die Außenkontur des Primärteils 10 durch Verformung während des Auftreibens auf das Primärteil 10 angenommen.

Nach Verbinden des Sekundärteils 20 mit der Teleskopkrone 30 durch Verkleben, wie in Fig. 8 gezeigt, wird die Teleskopkrone 30 samt Sekundärteil 20 auf das auf dem patientenseitigen Zahnstumpf 1 fixierten hülsenförmigen Primärteil 10 in axialer Richtung aufgeschoben. Aufgrund des Reibschlusses zwischen Sekundärteil 20 und Primärteil 10 wird eine ausreichende Haftung der Teleskopkrone 30 auf dem patientenseitigen Zahnstumpf 1, wie in Fig. 9 gezeigt, erzielt. Die Teleskopkrone 30 ist dabei von dem patientenseitigen Zahnstumpf 1 jederzeit separierbar, da zwischen Sekundärteil 20 und Primärteil 10 kein Haftmittel verwendet wird. Diese Bauteile sind lediglich aufgrund der Haftreibung miteinander verbunden.

### Bezugszeichen

- 1: - patientenseitiger Zahnstumpf
- 2: - Zahnwurzel
- 3: - mundhöhlenseitiger Zahnabschnitt
- 10: - Primärteil
- 11: - oberer Endabschnitt des Primärteils
- 20: - Sekundärteil
- 30: - Teleskopkrone
- 50: - zylinderförmiger Hohlkörper
- 50': - unterer Endabschnitt
- 50": - oberer Endabschnitt
- 51, 52: - Öffnungen an den Enden des zylinderförmigen Hohlkörpers
- 53: - oberer Randabschnitt des zylinderförmiger Hohlkörpers

- D2: - Außendurchmesser Primärteil
- D1: - Innendurchmesser Sekundärteil
- L1: - Länge des Sekundärteils/ zylinderförmiger Hohlkörper
- L2: - Länge des Primärteils
- F1: - Kraft zum Auftreiben des Sekundärteils auf das Primärteil
- F2: - Kraft zum Anformen des oberen Abschnitts Sekundärteils
- S-S: - Schnittlinie
- A: - Richtung der Kraft F2

## Patentansprüche

1. Zahntechnischer Aufbau, insbesondere Teleskopkrone (30) oder Teleskopprothese, umfassend mindestens ein auf zumindest einem patientenseitigen Zahnstumpf (1) anzuordnendes Primärteil (10), mindestens ein auf dem Primärteil anzuordnendes Sekundärteil (20) und eine Krone (30) oder eine Prothese,
wobei das mindestens eine Sekundärteil (20) in die Krone (30) oder die Prothese eingefügt, insbesondere eingeklebt ist,
wobei das mindestens eine Sekundärteil (20) aus einem zylinderförmigen und an seinen Enden Öffnungen (51, 52) aufweisenden Hohlkörper (50) gebildet ist,
**dadurch gekennzeichnet, dass** der zylinderförmige Hohlkörper (50) aus einem verformbaren Material gebildet ist, wobei der zylinderförmige Hohlkörper (50) mit einem Innendurchmesser (D1) kleiner als der Außendurchmesser (D2) des Primärteiles auf das Primärteil (10) mittels Druckbeaufschlagung so aufgetrieben ist, dass das als zylinderförmiger Hohlkörper (50) ausgebildete Sekundärteil die Außenkontur des Primärteils (10) durch Verformung während des Auftreibens angenommen hat.

2. Zahntechnischer Aufbau nach einem der vorhergehenden Ansprüche, **dadurch gekennzeichnet, dass** der zylinderförmige Hohlkörper (50) aus einer hochgoldhaltigen Legierung gebildet ist.

3. Zahntechnischer Aufbau nach einem der vorhergehenden Ansprüche, **dadurch gekennzeichnet, dass** die axiale Länge (L1) des zylinderförmigen Hohlkörpers (50) im Wesentlichen der axialen Länge (L2) des Primärteils (10) entspricht.

4. Zahntechnischer Aufbau nach einem der vorhergehenden Ansprüche, **dadurch gekennzeichnet, dass** das Primärteil (10) konusförmig ausgebildet ist.

## Claims

1. A dental structure, particularly a telescope crown (30) or a telescope prosthesis, including at least one primary portion (10), which is to be arranged on a tooth stump of a patient, at least one secondary portion (20), which is to be arranged on the primary portion, and a crown (30) or a prosthesis, wherein the at least one secondary portion (20) is fixed, particularly by adhesive, in the crown (30) or the prosthesis, wherein the at least one secondary portion (20) is constituted by a cylindrical hollow body (50) with openings (51, 52) at its ends, **characterised in that** the cylindrical hollow body (50) is formed from deformable material, wherein the cylindrical hollow body (50) has an internal diameter (D1), which is smaller than the external diameter (D2) of the primary portion, and is forced onto the primary portion (10) by the application of pressure so that the secondary portion, which is constructed in the form of a cylindrical hollow body (50), has adopted the external shape of the primary portion (10) by deformation during the forcing process.

2. A dental structure as claimed in one of the preceding claims, **characterised in that** the cylindrical hollow body (50) is formed from a high gold content alloy.

3. A dental structure as claimed in one of the preceding claims, **characterised in that** the axial length (L1) of the cylindrical hollow body (50) substantially corresponds to the axial length (L2) of the primary portion (10).

4. A dental structure as claimed in one of the preceding claims, **characterised in that** the primary portion (10) is of tapered shape.

## Revendications

1. Structure dentaire, en particulier couronne télescopique (30) ou prothèse télescopique, comprenant au moins une partie primaire (10) à monter sur au moins un moignon dentaire (1) au niveau d'un patient, au moins une partie secondaire (20) à monter sur la partie primaire et une couronne (30) ou une prothèse,
dans laquelle l'au moins une partie secondaire (20) est insérée, en particulier collée, dans la couronne (30) ou la prothèse,
dans laquelle l'au moins une partie secondaire (20) est formée d'un corps creux (50) cylindrique et présentant des ouvertures (51, 52) à ses extrémités,
**caractérisée en ce que** le corps creux (50) cylindrique est formé d'un matériau déformable, dans laquelle le corps creux (50) cylindrique présentant un diamètre intérieur (D1) inférieur au diamètre extérieur (D2) de la partie primaire est poussé sur la partie primaire (10) par application de pression, de telle sorte que la partie secondaire formée en tant que corps creux (50) cylindrique ait reçu le contour externe de la partie primaire (10) par déformation pendant la poussée.

2. Structure dentaire selon l'une des revendications précédentes, **caractérisée en ce que** le corps creux (50) cylindrique est formé d'un alliage à teneur élevée en or.

3. Structure dentaire selon l'une des revendications précédentes, **caractérisée en ce que** la longueur axiale (L1) du corps creux (50) cylindrique correspond essentiellement à la longueur axiale (L2) de la partie primaire (10).

4. Structure dentaire selon l'une des revendications précédentes, **caractérisée en ce que** la partie primaire (10) est de forme conique.
